# EUROPÄISCHE PATENTSCHRIFT

(11) **EP 1 276 785 B1**
(45) Veröffentlichungstag und Bekanntmachung des Hinweises auf die Patenterteilung: **12.04.2006**
(21) Anmeldenummer: 01955100.1
(22) Anmeldetag: 15.02.2001
(51) Int. Cl.: C08G 18/10, C08G 18/75, C08G 18/79, C08G 18/78, D06N 3/14

(54) **POLYURETHAN-BESCHICHTUNGEN AUF BASIS URETDION- UND/ODER OXADIAZINTRION-GRUPPEN ENTHALTENDER POLYISOCYANATE**
POLYURETHANE COATINGS, BASED ON POLYISOCYANATES CONTAINING URETDIONE AND/OR OXADIAZINETRIONE GROUPS
REVETEMENTS DE POLYURETHANE A BASE DE POLYISOCYANATE CONTENANT DES GROUPES URETDIONE ET/OU OXADIAZINETRIONE

(30) Priorität: 28.02.2000 DE 10009407
(43) Veröffentlichungstag der Anmeldung: 22.01.2003
(73) Patentinhaber: Bayer MaterialScience AG, 51368 Leverkusen (DE)
(72) Erfinder: GROTH, Stefan, 51375 Leverkusen (DE); SCHÜTZE, Detlef-Ingo, 51519 Odenthal (DE)
(86) Internationale Anmeldenummer: PCT/EP2001/001654
(87) Internationale Veröffentlichungsnummer: WO 2001/064767

(56) Entgegenhaltungen:
- EP-A- 0 789 017
- EP-A- 0 825 209
- US-A- 4 474 934
- LAAS H J ET AL: "ZUR SYNTHESE ALIPHATISCHER POLYISOCYANATE-LACKPOLYISOCYANATE MIT BIURET-, ISOCYANURAT- ODER URETDIONSTRUKTUR THE SYNTHESIS OF ALIPHATIC POLYISOCYANATES CONTAINING BIURET, ISOCYANURATE OR URETDIONE BACKBONES FOR USE IN COATINGS" JOURNAL FUR PRAKTISCHE CHEMIE, CHEMIKER ZEITUNG,DE,WILEY VCH, WEINHEIM, Bd. 336, Nr. 3, 1994, Seiten 185-200, XP000441642 ISSN: 1436-9966

## Beschreibung

Die Erfindung betrifft Polyurethan-Beschichtungen, die z.B. nach dem Gieß- oder Rakelverfahren auf flexiblen Substraten wie Textil oder Leder mittels reaktionsfähiger Massen (Reaktivbindemittel) auf Basis von Isocyanat-haltigen Verbindungen und Polyolen hergestellt werden können.

Lösungsmittelfreie bzw. -arme reaktionsfähige Massen auf Basis von NCO-Prepolymeren zur Herstellung von Polyurethanbeschichtungen auf flexiblen Substraten sind bekannt. Beispielsweise wird in der EP-A 0 490 158 ein Verfahren zur Herstellung von Polyurethan-Beschichtungen beschrieben, das durch eine hohe Reaktivität gekennzeichnet ist. Ein solches Verfahren ist aufgrund seine hohen Reaktivität nur für Sprüh-Anwendungen geeignet und kann wegen seiner sehr geringen Topfzeit nicht im Gieß- oder Rakelverfahren eingesetzt werden. Dagegen eignen sich Systeme auf Basis von blockieren Polyisocyanaten für solche Beschichtungsverfahren, wie z.B. die Kombination aus blockierten NCO-Prepolymeren und cycloaliphatischen Diaminen. Hierbei wird ein Ketoxim-blockiertes NCO-Prepolymerisat auf Basis von aromatischen Polyisocyanaten mit einem Diamin als Kettenverlängerer gemischt und anschließend durch eine Hitzebehandlung unter Abspaltung des Ketoxims und gegebenenfalls Verdampfen des Lösungsmittels ausgehärtet. Reaktionsfähige Massen dieser Art für die Beschichtung flexibler Substrate werden z.B. in der DE-A 2 902 090 beschrieben. Bei der Härtung der beschriebenen Systeme erfolgt also eine Abspaltung des Ketoxims, die selbst dann eine Abluftbehandlung notwendig macht, wenn die Systeme keine Lösungsmittel enthalten.

Dagegen werden in der EP-A 0 825 209 abspalterfreie Reaktivbindemittel beschrieben, die sich aufgrund ihrer günstigen Reaktionskinetik und der sehr guten mechanischen Film-Eigenschaften hervorragend zur Beschichtung von Textilien und anderen flächigen Substraten eignen. Nachteilig ist dabei, dass die Herstellung von monomerenarmen Reaktivbindemitteln einen erhöhten technischen Aufwand (Monomerenabtrennung durch Dünnschichtdestillation) erfordert.

Der vorliegenden Erfindung lag daher die Aufgabe zugrunde, Polyurethanbeschichtungen zur Verfügung zu stellen, die aus monomerenarmen Reaktivbindemitteln erhältlich sind, welche ohne Monomerenabtrennung herstellbar sind.

Überraschenderweise können durch die Kombination von bestimmter Uretdion- oder Oxadiazintriongruppen enthaltender Polyisocyanate-Prepolymere und bestimmter Diol-Kettenverlängerer Beschichtungen mit guten mechanischen Eigenschaften erhalten werden, die die Anforderungen für die Beschichtungen von flexiblen Substraten wie beispielsweise Textil erfüllen und daher diese Aufgabe lösen.

Gegenstand der Erfindung sind daher Polyurethanbeschichtungen, die dadurch gekennzeichnet sind, dass sie durch Umsetzung aliphatischer isocyanathaltige Prepolymere A) mit einer Polyolkomponente B) erhältlich sind, wobei
die Prepolymere A)
bezogen auf den Festkörper 1 bis 8 Gew.-% NCO enthalten, einen Gehalt an freiem monomeren Diisocyanat von weniger als 2 % aufweisen und einen Gehalt von 0,1 bis 1,5 mol aliphatisch angebundener Uretdion- (I) und/oder Oxadiazintriongruppen (II) pro 1000 g Prepolymer enthalten 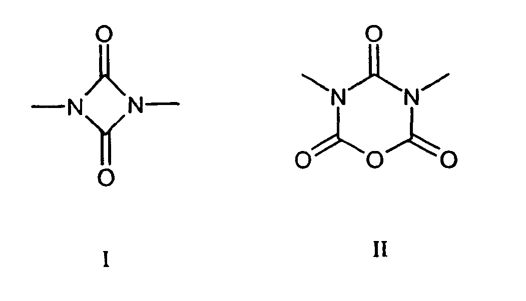 und die Polyolkomponente B)
aus mindestens 50 Äquivalent-%, bezogen auf die gegenüber Isocyanat reaktiven Gruppen, aus Verbindungen der Formel

HO-X-Y-X-OH (III)

worin
- Y: Methylen, Ethylen, -C≡C-, Cyclohexylen,-1,4, -1,3, -1,2, Phenylen-1,4, -1,3, -1,2 und
- X: Methylen, -OCH₂CH₂- (wobei der Sauerstoff an das Y gebunden ist), Cyclohexylen-1,4, -1,3, -1,2
besteht und
wobei das Äquivalentverhältnis der freien NCO-Gruppen aus A zu den NCOreaktiven Gruppen von B 0,90 bis 1,50 beträgt, gegebenenfalls unter Mitverwendung üblicher Hilfsstoffe und Additive, deren Verwendung zur Beschichtung von flexiblen Substraten wie Textil oder Leder sowie Verfahren zur Beschichtung dieser Substrate, z.B. durch Gießen oder Rakeln und anschließende Hitzebehandlung sowie die beschichteten Substrate selbst.

Im Nachfolgenden werden unter "mittleren Molekulargewichten" jeweils als Zahlenmittel bestimmten Molekulargewichte verstanden.

Bevorzugte NCO-Prepolymere A) besitzen mittlere Molekulargewichte von 1200 bis 10 000, vorzugsweise von 1500 bis 8 000. Der freie NCO-Gehalt liegt vorzugsweise zwischen 1,5 und 7 Gew.-%, besonders bevorzugt zwischen 2,0 und 5,0 %. Der Gehalt an monomerem Diisocyanat (Diisocyanate, die keine weiteren Heteroatome aufweisen) liegt vorzugsweise unter 0,5 %. Bevorzugte NCO-Prepolymere A) weisen eine mittlere NCO-Funtionalität von 2,0 bis 3,0, bevorzugt 2,1 bis 2,8 auf.

Die NCO-Prepolymeren A) können durch Umsetzung von Uretdion- und/oder Oxadiazintrion-Gruppen enthaltenden organischen Polyisocyanaten a) und gegebenfalls weiteren Polyisocyanaten b) mit gegenüber NCO reaktiven Verbindungen c) hergestellt werden.

Bei den technisch verfügbaren aliphatischen Uretdion-Gruppen enthaltenden Polyisocyanaten a) handelt es sich üblicherweise um Gemische, die sowohl Isocyanurat-, Iminooxadiazindion-, Allophanat oder Biuretstrukturen enthalten können. Ein Beispiel für ein solches Produkt ist Desmodur® N 3400 (Bayer AG, DE), ein Polyisocyanat auf Basis Hexamethylendiisocyanat, das neben Uretdiongruppen vor allem Isocyanuratgruppen enthält und somit eine mittlere NCO-Funktionalität von ca. 2,5 aufweist. Vorzugsweise werden Uretdiongruppen enthaltende Polyisocyanate auf Basis Hexamethylendiisocyanat eingesetzt.

Oxadiazintrion-Gruppen enthaltende Polyisocyanate sind beispielweise in der DE-A 1 670 666 und EP-A 0 081 712 beschrieben. Bevorzugt ist 3,5-Bis-[6-isocyanato-hexyl]-1,3,5-oxadiazin-2,4,6-trion, das durch Addition von einem Mol Kohlendioxid und 2 Mol Hexamethylendiisocyanat gebildet wird und gemäß DE-A 1 670 666 hergestellt werden kann.

Vorzugsweise werden Uretdion-Gruppen enthaltende Polyisocyanate und Oxadiazintrion-Gruppen enthaltende Polyisocyanate in Mischung eingesetzt, wobei das Molverhältnis Oxadiazintrion-Gruppen zu Uretdion-Gruppen vorzugsweise 1,0 bis 5,0, besonders bevorzugt 2,0 bis 4,0 beträgt.

Als weitere organische Polyisocyanate b) kommen aliphatische, cycloaliphatische und aromatische Polyisocyanate in Betracht. Geeignete Polyisocyanate b) sind beispielsweise Verbindungen der Formel Q(NCO)ₙ mit einem mittleren Molekulargewicht unter 800, worin n eine Zahl von 2 bis 4 und Q einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 4,4'-Diisocyanatodicyclohexylmethan, 3-Isocyanatomethyl-3,5,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanatocyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (IMCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische. Des weiteren können Polyisocyanate, wie sie z.B. in "Methoden der organischen Chemie" (Houben-Weyl), Bd. 14/2, Georg Thieme-Verlag, Stuttgart 1963, Seiten 61 bis 70 und in Liebigs Annalen der Chemie 562, Seiten 75 bis 136 beschrieben sind, mitverwendet werden. Auch aromatische Polyisocyanate wie 2,4- und 2,6-Toluylendiisocyanat, deren technische Gemische, oder 2,4'- und 4,4'-Diphenylmethandiisocyanate können mitverwendet werden, sind aber weniger bevorzugt. Besonders bevorzugt ist jedoch die Verwendung von aliphatischen Diisocyanaten und ganz besonders bevorzugt ist die Verwendung von 3-Isocyanatomethyl-3,5,5-trimethylcyclohexylisocyanat (Isophorondiisocyanat = IPDI).

Bevorzugte NCO-reaktive Verbindungen c) sind vor allem Polyole. Als Polyole können höhermolekulare und in untergeordneter Menge auch niedermolekulare Hydroxylverbindungen eingesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000, bevorzugt solche mit mittleren Molekulargewichten von 500 bis 6 500. Es werden vorzugsweise nur Diole eingesetzt, da die Verzweigung üblicherweise über die Polyisocyanatkomponente a) oder b) eingebracht wird.

Als niedermolekulare Polyhydroxylverbindungen können in der Polyurethan-Chemie übliche Polyole, mit Molekulargewichten von 62 bis 399, wie Ethylenglykol, Triethylenglykol, Tetraethylenglykol, Propandiol-1,2 und -1,3, Butandiol-1,4- und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite verwendet werden.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispiele hierfür sind:

Adipinsäure, Phthalsäure, Isophthalsäure, Bernsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen die oben genannten Polyole in Frage.

Die in Frage kommenden Polycarbonatpolyole sind durch Reaktion von Kohlensäurederivaten, z.B. Diphenylcarbonat oder Phosgen, mit Diolen erhältlich. Als derartige Diole kommen z.B. Ethylenglykol, Triethylenglykol, Tetraethylenglykol, Propandiol-1,2 und -1,3,-Butandiol-1,4- und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo-[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Vorzugweise erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum di- oder Trihexylenglykol erhalten wurden. Die Herstellung solcher Derivate ist z.B. aus DE-A 1 570 540 bekannt. Auch die in der DE-A 3 717 060 beschriebenen Polyether-Polycarbonatdiole können eingesetzt werden.

Die Hydroxypolycarbonate sollen im Wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Ganz besonders bevorzugt sind im Durchschnitt 2 bis 3 Hydroxylgruppen aufweisende Propylenoxidpolyether, die bis zu maximal 50 Gew.-% eingebaute Polyethylenoxid-Einheiten enthalten mit mittleren Molekulargewichten zwischen 200 und 9 000, und/oder difunktionelle Tetrahydrofuran-Polyether mit mittleren Molekulargewichten zwischen 200 und 4 000 und/oder Polypropylenoxydpolyether mit einem Gesamt-Unsättigungsgrad von maximal 0,04 mÄq/g und einem mittleren, aus OH-Gehalt und Funktionalität berechneten Molekulargewicht von 2 000 bis 12 000 eingesetzt.

Die erfindungsgemäß besonders bevorzugt einsetzbaren Polyetherpolyole mit niedrigem Unsättigungsgrad sind prinzipiell bekannt und werden beispielhaft in der DE-A 1 984 817 (PCT/99/07883) und den darin zitierten Veröffentlichungen beschrieben. Schlüssel zur Herstellung derartiger Polyetherpolyole mit niedrigem Unsättigungsgrad ist die Katalyse mit Metallcyaniden.

Die Herstellung der Komponente A) erfolgt vorzugsweise durch Umsetzung des Uretdion- und/oder Oxadiazintrion-haltigen Polyisocyanats a) mit den genannten Polyhydroxylverbindungen c) bei ca. 40 bis 100°C, wobei ein NCO/OH-Verhältnis von 1,5:1 bis 5:1, vorzugsweise 1,7:1 bis 4:1, eingestellt wird.

Falls weitere Polyisocyanate b) eingesetzt werden, können diese, wenn es sich um difunktionelle Typen handelt, zur Vorverlängerung der Polyhydroxylverbindungen c) eingesetzt werden. Höherfunktionelle Typen werden vorzugsweise in Mischung mit a) eingesetzt oder nachträglich zugegeben. Die Komponente A) kann zwecks Einstellung der optimalen Verarbeitungsviskosität von 20 000 bis 40 000 mPas bei 20°C mit bis zu 30 Gew.-%, vorzugsweise bis 20 Gew.-%, bezogen auf das NCO-Prepolymerisat, an organischen Lösungsmitteln wie beispielsweise Methoxypropylacetat oder Butylacetat gemischt werden.

Die Komponente B) besteht vorzugsweise zu mehr als 80 Äquivalent-%, besonders bevorzugt zu 100 Äquivalent-%, bezogen auf die gegenüber Isocyanat reaktiven Gruppen, aus Verbindungen der Formel III. Bevorzugte Verbindungen III sind Verbindungen, die sich auch in Prepolymer A unter 50°C nicht lösen. Besonders bevorzugte Verbindungen III umfassen beispielsweise 1,2-Bis(2-hydroxyethoxy)benzol, 1-3-Bis(2-hydroxyethoxy)benzol, Bis-1,4-(hydroxymethyl)benzol, trans-1,4-Bis(hydroxymethyl)-cyclohexan, 1,2-Bis(4-hydroxycyclohexyl)ethan, Bis(4-hydroxycyclohexyl)methan, 2-Butin-1,4-diol, Die besonders bevorzugte Verbindung III ist 1,4-Bis-(2-hydroxyethoxy)-benzol.

Die Komponente B) kann als solche zur Herstellung der Reaktivbindemittel direkt mit dem Prepolymer gemischt werden. Es hat sich aber zwecks besserer Dosierbarkeit als günstig erwiesen, die normalerweise festen Verbindungen III in einer flüssigen Komponente anzurühren. Solche Mischungen bestehen dann vorzugsweise aus 20 bis 90, besonders bevorzugt 30 bis 70 Gew.% Verbindungen III und 10 bis 80, besonders bevorzugt 30 bis 70 Gew.-% flüssige Komponente sowie 0 bis 10 Gew-%, vorzugsweise 0,1 bis 5 Gew.-% weiterer Zusatzstoffe wie Dispergiermittel, Antiabsetzmittel, Katalysatoren usw. Die flüssige Komponente kann eines der oben beschriebenen höhermolekularen Polyole und/oder ein nicht mit Isocyanaten reagierender Weichmacher und/oder ein beliebiges Lösungsmittel sein. Beispiele für geeignete Solventien sind die üblichen Lacklösemittel: Ester wie Butylacetat, Etherester wie Methoxypropylacetat, Ketone wie Aceton und 2-Butanon, Aromaten wie Xylol, Toluol oder technische Aromaten- oder Aliphatengemische oder auch dipolare Solventien wie beispielsweise N-Methylpyrrolidon, N,N-Dimethylacetamid, N,N-Dimethylformamid und Dimethylsulfoxid oder Mischungen verschiedener Lösungsmittel.

Als flüssige Komponente sind Lösungsmittel bevorzugt. Besonders bevorzugt sind toxikologisch weniger kritische aliphatische Ester oder Etherester wie beispielsweise Methoxypropylacetat oder Butylacetat.

Um eine gute Oberflächenstruktur des Films zu gewährleisten, hat es sich als zweckmäßig erwiesen, dass die feste Verbindung III in feiner Verteilung vorliegt. Die bevorzugte Größenverteilung der Teilchen liegt bei d90 = 1 bis 80 µm und d99 = 5 bis 120 µm, bevorzugt d90 = 3 bis 40 µm und d99 = 5 bis 60 µm. Die Verbindung III wird dann üblicherweise mit einem Dissolver in die flüssige Komponente eingearbeitet. Es ist aber auch möglich, eine übersättigter Lösung der Verbindung III durch Rekristallisieren in die gewünschte Dispersion zu überführen oder die Verbindung III aus der Schmelze zu dispergieren. Eine Herstellung in den in der Lackindustrie üblichen Perlmühlen ist ebenfalls möglich.

Die rheologischen Eigenschaften und das Absetzverhalten kann durch spezielle Additive wie hydrierte Ricinusöle, Polyharnstoffderivate oder spezielle Kieselsäuren günstig beeinflußt werden (siehe J. Beilman, "Lackadditive", Wiley-VCH-Verlag GmbH. 1998). Als Dispergiermittel sind insbesondere polymere Additive geeignet. Sie bestehen vorzugsweise aus chemisch unterschiedlichen Segmenten, die je nach Struktur entweder mit der Oberfläche der zu dispergierenden Teilchen in Wechselwirkung treten oder aber als solvatisierte Ketten zu deren sterischer Stabilisierung beitragen. Als Beispiele der funktionellen Gruppen, die mit den Pigment- oder Füllstoffteilchen oder aber mit der kristallinen Verbindung III in der erfindungsgemäßen Vernetzerkomponente B in Wechselwirkung treten können, sind Carbonyl-, Amino-, Sulfat- oder Phosphatgruppen zu nennen. Beispiele für Polymersegmente, die zur Stabilisierung der Teilchen beitragen, sind Polyether, Polyester oder Polyacrylate.

Die crfindungsgemäße Einsatzmenge der Katalysatoren, die als Bestandteil der Komponente B oder als Katalysatorlösung in einem beliebigen Lösungsmittel eingesetzt werden kann beträgt 0,001 bis 2, bevorzugt 0,005 bis 0,5 Gew.-%, bezogen auf das Gesamtgewicht der Komponente A + Komponente B. Ganz besonders geeignet im Sinne der Erfindung sind Dioctylzinn-IV-bis(2-ethylhexylmercaptoacetat), Dibutylzinn-IV-bis(2-ethylhexylmercaptoacetat) und Dimethylzinn-IV-bis(2-ethylhexylmercaptoacetat) sowie latente Katalysatoren aus Zinn- oder Wismutverbindungen und Mercaptoverbindungen, wie sie z.B. in der US-A 4 788 083 beschrieben sind.

Die Vermischung des NCO-Prepolymerisats A mit der Kettenverlängererkomponente B erfolgt im allgemeinen etwa im Verhältnis der Äquivalentgewichte dieser Komponenten, obwohl für einige Anwendungszwecke auch eine Untervemetzung zweckmäßig ist, so dass das Äquivalentverhältnis von NCO zu OH erfindungsgemäß im Allgemeinen 0,90 bis 1,50, bevorzugt 1,0 bis 1,3 beträgt.

Zur Herstellung der gebrauchtsfertigen Reaktivmassen können Zuschläge wie z.B. Pigmente, UV-Stabilisatoren, Verlaufmittel, Antioxidantien, Füllstoffe oder Treibmittel beigemischt werden.

Es können Lackhilfsmittel eingesetzt werden, wie sie beispielsweise in J. Beilman, "Lackadditive", Wiley-VCH-Verlag GmbH, 1998 beschrieben sind. Insbesondere sind Verlauf und Dispergiermittel sowie rheologische Additive für die Herstellung der erfindungsgemäßen Massen geeignet. So können beispielsweise Additive auf Siliconbasis zur Verbesserung der Oberflächeneigenschaften eingesetzt werden. Zur Verbesserung des Verlaufs eignen sich besonders Additive auf Basis von Polyacrylaten. Die rheologischen Eigenschaften der Massen und das Absetzverhalten füllstoff- und pigmenthaltiger Massen kann durch spezielle Additive wie hydrierte Ricinusöle, Polyharnstoffderivate oder spezielle Kieselsäuren günstig beeinflußt werden.

Lackadditive, die den erfindungsgemäßen Massen beigesetzt werden können, können in Mengen von 0,01 bis 5 Gew.-%, vorzugsweise 0,05 bis 3 Gew.%, eingesetzt werden.

Weiterhin können den erfindungsgemäßen Massen flammhemmende Zusätze beigemischt werden. Darunter sind feste oder flüssige Stoffe zu verstehen, deren Zusatz eine Verbesserung des Brandverhaltens des ausgehärteten Polymerfilms bewirkt. Diese Mittel sind z.B. in Journal of Coated Fabrics 1996, Vol. 25, 224 ff beschrieben. Besonders geeignet für die Anwendung in den erfindungsgemäßen Massen sind halogen- und antimonfieie Flammschutzmittel wie Phosphor- oder Borsäurederivate, Calciumcarbonat, Aluminiumhydroxid, Magnesiumhydroxid oder Melamin und Melaminderivate. Besonders bevorzugt ist Melamin und seine Derivate wie beispielsweise Melaminborat oder Melaminisocyanurat. Die Flammschutzmittel können den erfindungsgemäßen Massen zu 2 bis 70 Gew.-%, bevorzugt 5 bis 35 Gew.-%, bezogen auf die Summe der Komponente A + B, zugegeben werden.

Die erfindungsgemäßen reaktionsfähigen Massen werden vorzugsweise durch Rakeln (Streichen) nach dem Direkt- oder Umkehrbeschichtungsverfahren verarbeitet.

Die Aushärtungszeit der erfindungsgemäßen Massen beträgt 2 bis 18, vorzugsweise 6 bis 12 Minuten. Die kurze Aushärtungszeit ermöglicht es, mit hoher Geschwindigkeit zu beschichten. Natürlich ist es möglich, durch einen jeweiligen spezifischen chemischen Aufbau des NCO-Prepolymerisates Schichten mit unterschiedlichen Eigenschaften, wie z.B. eine Haft-, Schaum-, Zwischen- oder Deckschicht, zu erzeugen.

Die Herstellung z.B. einer Umkehrbeschichtung kann beispielsweise folgendermaßen erfolgen: Man trägt zuerst auf einen geeigneten Zwischenträger, z.B. ein Trennpapier, die Reaktivmasse für den Deckstrich in einer Menge von ca. 30 bis 100 g/m² auf, härtet im Trockenkanal aus, bringt auf den trockenen Deckstrich die Reaktivmasse für den Haftstrich ebenfalls in einer Menge von ca. 30 bis 100 g/m², kaschiert das Substrat hinzu, härtet die Beschichtung in einem weiteren Trockenkanal bei ca. 120 bis 190°C, vorzugsweise 140 bis 170°C, aus und zieht das beschichtete Substrat vom Trennträger ab. Selbstverständlich ist es auch möglich, nur den Deck-, Zwischen- oder Haftstrich nach diesem Beschichtungsverfahren zu erzeugen und für den anderen Strich andere Beschichtungssysteme des Standes der Technik einzusetzen.

Wie schon erwähnt, können die Reaktivmassen aber auch im Direktstreichverfahren unmittelbar auf das textile Substrat aufgebracht werden. Hierbei ist der abspalterfreie und lösungsmittelarme Charakter der erfindungsgemäßen Reaktivmassen von großem Vorteil bei der Herstellung von dicken Planenbeschichtungen. Mit Auftragsmengen von 100 bis 200 g/m² können auf diese Weise ca. 0,4 mm dicke, technische Beschichtungen in nur einem Arbeitsgang erstellt werden.

Sollen mit den erfindungsgemäßen Reaktivmassen Schaumschichten hergestellt werden, dann setzt man ihnen Treibmittel sowie zweckmäßigerweise auch Schaumstabilisatoren zu. Geeignete Zusätze werden z.B. in der DE-A 1 794 006 sowie in der US-A 3 262 805 beschrieben.

### Beispiele

### Prepolymer A1

2000 g (2 Äquiv) Polytetrahydrofuran mit einem mittleren Molekulargewicht von 2000 (Terathane® 2000, DuPont) wird zunächst bei 100°C mit 111 g (1 Äquiv) Isophorondiisocyanat bis zum Verschwinden der Isocyanatbande im IR-Spektrum umgesetzt. Anschließend werden 671 g Methoxypropylacetat zugesetzt und auf 40°C abgekühlt.

Man gibt in einem Guß 193 g (1 Äquiv) Desmodur® N 3400 (Bayer AG, DE) und 380 g (2 Äquiv) 3,5-Bis-[6-isocyanatohexyl]-1,3,5-oxadiazin-2,4,6-trion (hergestellt nach DE-A 1 670 666) zu und erhitzt auf 75°C bis ein NCO-Gehalt von 2,4 % erreicht ist. Das Prepolymer hat einen Festkörpergehalt von 80 % eine Viskosität von 35 000 mPas bei 23°C und ein Isocyanat-Äquivalentgewicht von 1 750 g.

### Prepolymer A2

2 000 g (2 Äquiv) Desmophen® C200 (lineares Polyestercarbonatdiol mit mittlerem Molgewicht 2 000; Bayer AG, DE) wird zunächst bei 100°C mit 111 g (1 Äquiv) Isophorondiisocyanat und 150 g Methoxypropylacetat bis zum Verschwinden der Isocyanatbande im IR-Spektrum umgesetzt. Anschließend werden weitere 571 g Methoxypropylacetat zugesetzt und auf 40°C abgekühlt. Man gibt in einem Guß 772 g (4 Äquiv) Desmodur® N 3400 (Bayer AG, DE) zu und erhitzt auf 75°C bis ein NCO-Gehalt von 3,1 % erreicht ist. Das Prepolymer hat einen Festkörpergehalt von 80 % und ein Isocyanat-Äquivalentgewicht von 1 355 g.

### Prepolymer A3

2 000 g (2 Äquiv) Polytetrahydrofuran mit einem mittleren Molekulargewicht von 2 000 (Terathane® 2000, DuPont) wird zunächst bei 100°C mit 111 g (1 Äquiv) Isophorondiisocyanat bis zum Verschwinden der Isocyanatbande im IR-Spektrum umgesetzt. Anschließend werden 683 g Methoxypropylacetat zugesetzt und auf 40°C abgekühlt. Man gibt in einem Guß 579 g (3 Äquiv) Desmodur® N 3400 (Bayer AG, DE) zu und erhitzt auf 75°C bis ein NCO-Gehalt von 2,4 % erreicht ist. Das Prepolymer hat einen Festkörpergehalt von 80 % und ein Isocyanat-Äquivalentgewicht von 1 750 g.

### Komponente B

40 g 1,4-Bis-(2-hydroxyethoxy)benzol mit einer Teilchengrößenverteilung d90 von 15 µm und d99 von 31 µm werden in einem Dissolver bei maximal 30°C in eine Lösung von 0,4 g Dibutylzinndilaurat und 0,4 g Thioglykolsäure-2-ethylhexylester in 60 g Methoxypropylacetat eingetragen. Die erhaltene Dispersion hat einen OH-Gehalt von 6,9 % und somit ein Äquivalentgewicht von 248 g.

### Beispiel 1

100 g des Prepolymerisats A1 werden mit 14,2 g der Komponente B, 1 g des Verlaufsmittels Levacast® Fluid SN (Bayer AG, DE) sowie 0,5 g Irganox® 1010 (Ciba Specialties) vermischt. Die Mischung hat eine Anfangsviskosität von etwa 29000 mPas, gemessen bei 23°C. Nach dem Auftrag auf ein Trennpapier in einer Schichtdicke von ca. 100 µm wird die Mischung durch stufenweise Hitzebehandlung (3 Min. 120°C und 3 Min 150°C) ausgehärtet. Man erhält einen elastischen, homogenen Film mit folgenden mechanischen Eigenschaften:

| | |
|---|---|
| Modul (100 %) | 3,3 MPa |
| Zugefestigkeit | 10,9 MPa |
| Bruchdehnung | 470 % |
| Essigesterquellung | 187 % |
| Schmelzbereich | 222-226°C |

### Beispiel 2

100 g des Prepolymerisats A2 werden mit 18,3 g der Komponente B, 1 g des Verlaufsmittels Levacast® Fluid SN (Bayer AG, DE) sowie 0,5 g Irganox® 1010 (Ciba Specialties) vermischt. Die Mischung hat eine Anfangsviskosität von etwa 40 000 mPas, gemessen bei 23°C. Nach dem Auftrag auf ein Trennpapier in einer Schichtdicke von ca. 100 µm wird die Mischung durch stufenweise Hitzebehandlung (3 Min. 120°C und 3 Min 150°C) ausgehärtet. Man erhält einen elastischen, homogenen Film mit folgenden mechanischen Eigenschaften:

| | |
|---|---|
| Modul (100 %) | 4,7 MPa |
| Zugefestigkeit | 5,8 MPa |
| Bruchdehnung | 180 % |
| Essigesterquellung | 140 % |
| Schmelzbereich | 214°C |

### Beispiel 3

100 g des Prepolymerisats A 1 werden mit 14,2 g der Komponente B, 1 g des Verlaufsmittels Levacast® Fluid SN (Bayer AG, DE) sowie 0,5 g Irganox® 1010 (Ciba Specialties) vermischt. Die Mischung hat eine Anfangsviskosität von etwa 45 000 mPas, gemessen bei 23°C. Nach dem Auftrag auf ein Trennpapier in einer Schichtdicke von ca. 100 µm wird die Mischung durch stufenweise Hitzebehandlung (3 Min. 120°C und 3 Min. 150°C) ausgehärtet. Man erhält einen elastischen, homogenen Film mit folgenden mechanischen Eigenschaften:

| | |
|---|---|
| Modul (100 %) | 3,3 MPa |
| Zugefestigkeit | 4,6 MPa |
| Bruchdehnung | 210 % |
| Essigesterquellung | 140 % |
| Schmelzbereich | 220°C |

## Patentansprüche

1. Polyurethanbeschichtungen erhältlich durch Umsetzung aliphatischer isocyanathaltige Prepolymere A) mit einer Polyolkomponente B), wobei
die Prepolymere A)
bezogen auf den Festkörper 1-8 Gew.-% NCO enthalten, einen Gehalt an freiem monomeren Diisocyanat von weniger als 2 % aufweisen und einen Gehalt von 0,1 bis 1,5 mol aliphatisch angebundener Uretdion- (I) und/oder Oxadiazintriongruppen (II) pro 1000 g Prepolymer enthalten 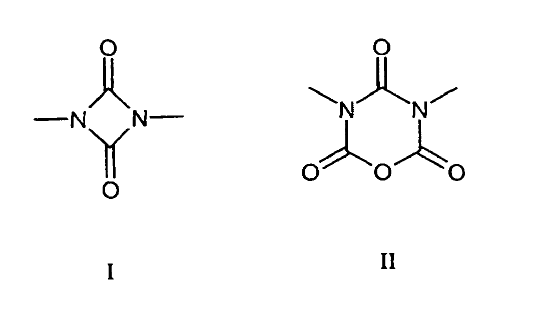 und die Polyolkomponente B)
aus mindestens 50 Äquivalent-%, bezogen auf die gegenüber Isocyanat reaktiven Gruppen, aus Verbindungen der Formel
HO-X-Y-X-OH (III)
worin
Y Methylen, Ethylen, -C≡C-, Cyclohexylen,-1,4, -1,3, -1,2, Phenylen-1,4, -1,3,-1,2 und
X Methylen, -OCH₂CH₂- (wobei der Sauerstoff an das Y gebunden ist), Cyclohexylen-1,4, -1,3, -1,2
besteht und
wobei das Äquivalentverhältnis der freien NCO-Gruppen aus A zu den NCOreaktiven Gruppen von B 0,90 bis 1,50 beträgt.

2. Polyurethanbeschichtungen gemäß Anspruch 1, **dadurch gekennzeichnet, dass** die Polyolkomponente aus mindestens 80 Äquivalent-%, bezogen auf die gegenüber Isocyanat reaktiven Gruppen, aus 1,4-Bis(2-hydroxyethoxy)benzol besteht.

3. Polyurethanbeschichtungen gemäß Ansprüchen 1 bis 2, **dadurch gekennzeichnet, dass** das Prepolymer A) einem Gehalt an monomerem Diisocyanat von unter 0,5 Gew.-% aufweist.

4. Polyurethanbeschichtungen gemäß Ansprüchen 1 bis 3, **dadurch gekennzeichnet, dass** auf Hexamethylendiisocyanat basierende Uretdion-Gruppen und Oxadiazintrion-Gruppen enthaltende Polyisocyanate eingesetzt werden, wobei das Molverhältnis Oxadiazintrion-Gruppen zu Uretdion-Gruppen 2,0 bis 4,0 beträgt.

5. Verwendung der Polyurethanbeschichtungen gemäß Ansprüchen 1 bis 4 zur Beschichtung von Textil.

6. Mit den Polyurethanbeschichtungen gemäß Ansprüchen 1 bis 4 beschichtetes Textil.

7. Verfahren zur Beschichtung von Textil oder Leder, **dadurch gekennzeichnet, dass** man durch Rakeln eine Mischung der Einsatzstoffe zur Herstellung der Polyurethanbeschichtungen gemäß Ansprüchen 1 bis 4 auf Textil oder Leder aufbringt und dort abreagieren lässt.

8. Verfahren zur Beschichtung von Textil oder Leder, **dadurch gekennzeichnet, dass** man durch Gießen eine Mischung der Einsatzstoffe zur Herstellung der Polyurethanbeschichtungen gemäß Ansprüchen 1 bis 4 auf Textil oder Leder aufbringt und dort abreagieren lässt.

9. Mit den Polyurethanbeschichtungen gemäß Ansprüchen 1 bis 4 beschichtetes Leder.

## Claims

1. Polyurethane coatings which may be obtained by reaction of aliphatic, isocyanate-containing prepolymers A) with a polyol component B), wherein
the prepolymers A)
based on solids, contain 1-8 wt.% of NCO, have a free monomeric diisocyanate content of less than 2% and contain from 0.1 to 1.5 mole of aliphatically bound uretidione (I) and/or oxadiazine trione groups (II) per 1000 g of prepolymer 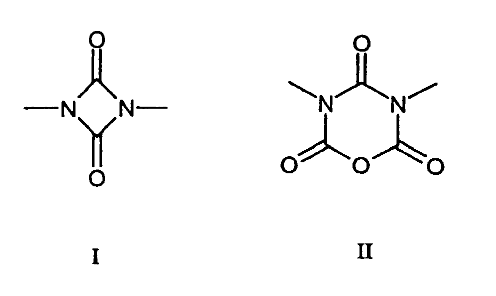 and the polyol component B)
is composed of at least 50 equivalent %, based on the groups which are reactive towards isocyanate, of compounds corresponding to the formula
HO-X-Y-X-OH (III)
wherein
Y means methylene, ethylene, -C≡C-, cyclohexylene-1,4, -1,3, -1,2, phenylene-1,4, -1,3, -1,2 and
X means methylene, -OCH₂CH₂- (the oxygen being bound to the Y), cyclohexylene-1,4, -1,3, -1,2,
and
wherein the equivalent ratio of the free NCO groups of A to the NCO-reactive groups of B is 0.90 to 1.50.

2. Polyurethane coatings according to claim 1, **characterised in that** the polyol component is composed of at least 80 equivalent %, based on the groups which are reactive towards isocyanate, of 1,4-bis(2-hydroxyethoxy)benzene.

3. Polyurethane coatings according to claims 1 or 2, **characterised in that** the prepolymer A) has a monomeric diisocyanate content of less than 0.5 wt.%.

4. Polyurethane coatings according to any of claims 1 to 3, **characterised in that** polyisocyanates containing uretidione groups and oxadiazine trione groups based on hexamethylene diisocyanate are used, the molar ratio of oxadiazine trione groups to uretidione groups being 2.0 to 4.0.

5. Use of the polyurethane coatings according to any of claims 1 to 4 for coating textile.

6. Textile coated with the polyurethane coatings according to any of claims 1 to 4.

7. Process for coating textile or leather, **characterised in that** a mixture of the substances used for the preparation of the polyurethane coatings according to any of claims 1 to 4 is applied to textile or leather by knife coating and allowed to react there.

8. Process for coating textile or leather, **characterised in that** a mixture of the substances used for the preparation of the polyurethane coatings according to any of claims 1 to 4 is applied to textile or leather by casting and allowed to react there.

9. Leather coated with the polyurethane coatings according to any of claims 1 to 4.

## Revendications

1. Revêtements de polyuréthannes obtenus par réaction de prépolymères aliphatiques à groupes isocyanates A) avec un composant polyol B),
les prépolymères A)
contenant 1 à 8 % en poids de NCO sur les matières solides, ayant une teneur en diisocyanate monomère libre inférieure à 2 % et une teneur de 0,1 à 1,5 mol de groupes uret-dione (I) et/ou oxadiazinetrione (II) à liaisons aliphatiques pour 1 000 g du prépolymère 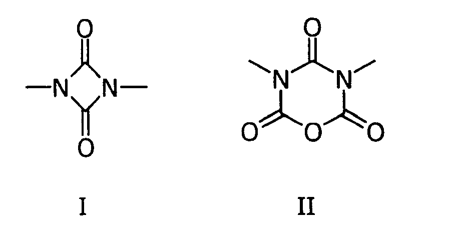 et le composant polyol B) consistant
pour au moins 50 équivalents %, par rapport aux groupes réactifs avec les isocyanates, en composés de formule
HO-X-Y-X-OH (III)
dans laquelle
Y représente un groupe méthylène, éthylène, -C≡C-, cyclohexylène-1,4, -1,3, -1,2, phénylène-1,4, -1,3, -1,2 et
X représente un groupe méthylène, -OCH₂CH₂- (l'oxygène étant fixé sur Y), cyclohexylène-1,4, -1,3, -1,2,
et le rapport entre les équivalents de groupes NCO libres de A et les groupes réactifs avec les groupes NCO de B allant de 0,90 à 1,50.

2. Revêtements de polyuréthannes selon la revendication 1, **caractérisés en ce que** le composant polyol consiste pour au moins 80 équivalents %, par rapport aux groupes réactifs avec les isocyanates, en le 1,4-bis(2-hydroxyéthoxy)benzène.

3. Revêtements de polyuréthannes selon les revendications 1 à 2, **caractérisés en ce que** le prépolymère A) est à une teneur en diisocyanate monomère inférieure à 0,5 % en poids.

4. Revêtements de polyuréthannes selon les revendications 1 à 3, **caractérisés en ce qu'**on met en oeuvre des polyisocyanates à base de l'hexaméthylènediisocyanate, contenant des groupes uret-dione et des groupes oxadiazinetrione, avec un rapport molaire de 2,0 à 4,0 entre les groupes oxadiazinetrione et les groupes uret-dione.

5. Utilisation des revêtements de polyuréthannes selon les revendications 1 à 4 pour le revêtement de textiles.

6. Textiles portant des revêtements de polyuréthannes selon les revendications 1 à 4.

7. Procédé pour le revêtement de textiles ou du cuir, **caractérisé en ce qu'**on applique sur les textiles ou le cuir, par enduction, un mélange des matières premières servant à la préparation des revêtements de polyuréthannes selon les revendications 1 à 4 et on les fait réagir sur les textiles ou le cuir.

8. Procédé pour revêtir des textiles ou du cuir, **caractérisé en ce qu'**on applique sur les textiles ou le cuir, par coulée, un mélange des matières premières servant à la préparation des revêtements de polyuréthannes selon les revendications 1 à 4 et on les fait réagir sur les textiles ou le cuir.

9. Cuir portant des revêtements de polyuréthannes selon les revendications 1 à 4.
